Europäisches Patentamt

European Patent Office

Office européen des brevets

(11) Veröffentlichungsnummer: **0 514 728 A1**

## (12) EUROPÄISCHE PATENTANMELDUNG

(21) Anmeldenummer: **92107858.0**

(22) Anmeldetag: **11.05.92**

(51) Int. Cl.⁵: **G03B 21/14**, G03B 21/20, G02B 26/00

(30) Priorität: **23.05.91 DE 4116803**

(43) Veröffentlichungstag der Anmeldung:
**25.11.92 Patentblatt 92/48**

(84) Benannte Vertragsstaaten:
**DE FR GB**

(71) Anmelder: **Agfa-Gevaert AG**

**W-5090 Leverkusen 1(DE)**

(72) Erfinder: **Hackenberg, Hubert, Dipl.-Ing.**
**Martin-Luther-Strasse 1**
**W-8150 Holzkirchen(DE)**
Erfinder: **Liermann, Traugott, Dipl.-Ing.**
**Bussardstrasse 40**
**W-8025 Unterhaching(DE)**
Erfinder: **Schrecke, Hans Joachim, Dipl.-Ing.**
**Zehentmeierstrasse 13a**
**W-8011 Grasbrunn(DE)**

(54) **Vorrichtung zur gleichmässigen Ausleuchtung einer Projektionsfläche.**

(57) Eine Vorrichtung zur gleichmäßigen Ausleuchtung einer Projektionsfläche mit einer Lichtquelle und mit zwischen der Lichtquelle und der Projektionsfläche angeordneten optischen Elementen, wobei der Abstand zwischen der Lichtquelle und den optischen Elementen veränderbar ist, ist so ausgebildet, daß
- eine Meßvorrichtung (8, 8a, 8b) die auf der Projektionsfläche (7) auftreffende Lichtintensität registriert und
- eine Einstellvorrichtung (10) den Abstand zwischen der Lichtquelle (1, 1') und den optischen Elementen (2a, 2b) in Abhängigkeit von der registrierten Lichtintensität derart verändert, daß Helligkeit und/oder deren Verteilung optimiert werden.

Fig. 1

Die Erfindung betrifft eine Vorrichtung nach dem Oberbegriff des Anspruchs 1.

Eine solche Vorrichtung ist bekannt aus der DE-OS 24 12 875. Bei der dort beschriebenen Vorrichtung kann vom Benutzer die Position der Lampe bezüglich einer Optik so verändert werden, daß sich eine möglichst gleichmäßige Ausleuchtung der Projektionsfläche ergibt. Nachteilig bei dem bekannten Verfahren ist, daß der Benutzer die Position der Lichtquelle manuell einstellen muß und die Einstellung zudem von der subjektiven Beurteilung des Benutzers abhängt. Bei der Verwendung von Wechselobjektiven mit unterschiedlicher Brennweite oder Zoomobjektiven mit veränderlichen Brennweiten ist für jede Brennweite eine gesonderte Einstellung der Ausleuchtung durch den Benutzer notwendig. Die Einstellung fordert einen gewissen Zeitaufwand oder, wenn die Einstellung unterbleibt, erhält man eine u.U. unbefriedigende Ausleuchtung der Projektionsfläche.

Aufgabe der Erfindung ist es deshalb, eine Vorrichtung zu schaffen, bei welcher die Einstellung der Ausleuchtung nicht von der subjektiven Beurteilung des Benutzers abhängt und der Benutzer keine zeitaufwendigen Einstellarbeiten vornehmen muß.

Diese Aufgabe wird gelöst durch die im Kennzeichen des Anspruchs 1 genannten Merkmale der Erfindung.

Nach der Erfindung wird zunächst durch eine Meßvorrichtung die auf der Projektionsfläche auftreffende Lichtintensität registriert und dann durch eine Einstellvorrichtung der Abstand zwischen der Lichtquelle und den optischen Elementen verändert.

Es hat sich gezeigt, daß es bei vielen Anwendungsfällen ausreicht, nur die in einem Punkt der Projektionsfläche auftretende Lichtintensität zu messen und den Abstand zwischen der Lichtquelle und dem optischen Element in Abhängigkeit von diesem Meßergebnis zu verändern. Dies erlaubt ein schnelles Einstellen der Lampenposition, wenn keine großen Helligkeitsunterschiede auf der Projektionsfläche auftreten und nur die maximale Bildhelligkeit erreicht werden soll.

Bei Anwendungsfällen, bei denen mehrere verschiedene Objektive mit stark unterschiedlichen Brennweiten zum Einsatz kommen, die bauartbedingt Helligkeitsunterschiede hervorrufen, hat es sich als vorteilhaft erwiesen, daß die Meßvorrichtung an mehreren verschiedenen Punkten der Projektionsfläche die auftretende Lichtintensität ermittelt. Dies ist zwar etwas zeitaufwendiger als nur an einem Punkt zu messen, hat aber den Vorteil, daß bei stärkeren Helligkeitsunterschieden auf der Projektionsfläche trotzdem die maximale Bildhelligkeit gefunden wird.

In einer weiteren möglichen Ausführungsform der Erfindung wird die optimale Ausleuchtung mit den gleichen Mitteln, aber in umgekehrter Reihenfolge erreicht. Der Abstand zwischen der Lichtquelle und den optischen Elementen wird so lange verändert, bis die Meßvorrichtung ein Maximum für die auftreffende Lichtintensität ermittelt hat. Ein Motor bewegt dazu die Lichtquelle entlang ihres Verstellbereiches, bis die Meßvorrichtung ein Maximum für die auf der Projektionsfläche auftreffende Lichtintensität ermittelt hat und worauf die Bewegung der Lichtquelle gestoppt wird.

Nachfolgend wird die Erfindung anhand einer Figur näher erläutert.

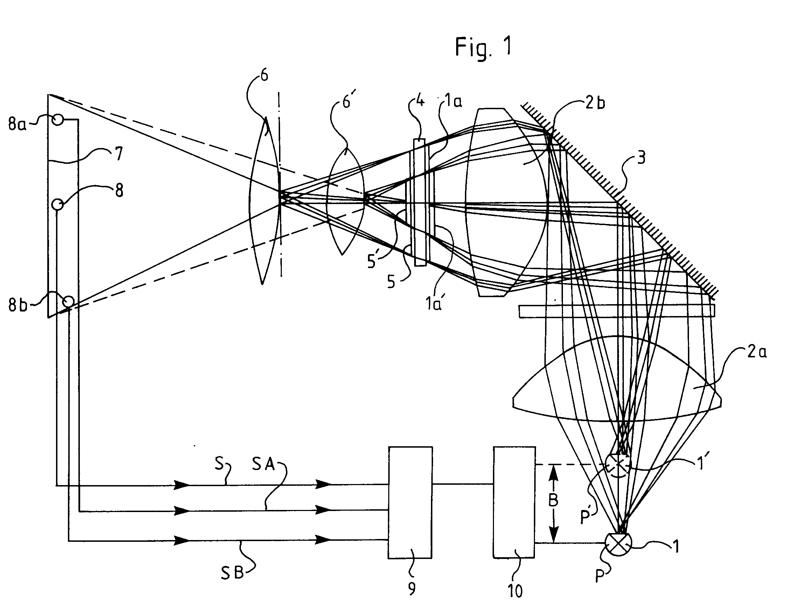

Die Figur 1 zeigt in teilweise schematischer Darstellung den Strahlengang von der Lichtquelle durch mehrere optische Elemente bis zur Projektionsfläche.

Mit 1 ist eine Lichtquelle in einer ersten Position P und einer zweiten Position P' bezeichnet. Die von der Lichtquelle 1 ausgehenden Lichtstrahlen durchdringen ein erstes optisches Element 2a, werden an einem Spiegel 3 reflektiert, verlaufen durch ein zweites optisches Element 2b und beleuchten ein Bildfenster 4, in welchem sich eine Bildvorlage 5 befindet. Eine Linse 6 bildet die Bildvorlage 5 auf einer Projektionsfläche 7 ab. Die Linse 6 bzw. 6' hat je nach Größe der Bildvorlage 5 bzw. 5' einen anderen Vergrößerungsfaktor, damit verschieden große Bildvorlagen 5, bzw. 5' formatfüllend auf der Projektionsfläche 7 wiedergegeben werden. Helligkeitsunterschiede auf dem Bildfenster 4 werden durch die Linse 6 auch auf der Projektionsfläche 7 abgebildet.

Die von der Lichtquelle 1 ausgehenden Linien beschreiben den Beleuchtungsstrahlengang, der mit dem Abstand der Lichtquelle von den optischen Elementen variiert. Die Lichtstrahlen, welche von der in Position P befindlichen Lichtquelle 1 ausgehen, beleuchten den Bereich 1a auf dem Bildfenster 4. Davon stark unterschiedlich ist der auf dem Bildfenster 4 beleuchtete Bereich 1a', wenn sich die Lichtquelle 1 in der Position P' befindet. Für die Beleuchtung von kleinen Bildvorlagen 5' ist daher die Position P' zu wählen, bei größeren Bildvorlagen 5 entsprechend die Position P.

Ziel der Vorrichtung ist es, die Projektionsfläche 7 möglichst gleichmäßig und hell auszuleuchten. Es ist daher ein Sensor 8 vorgesehen, der die auf der Projektionsfläche 7 auftreffende Lichtintensität mißt und das Meßergebnis an ein Steuergerät 9 übermittelt. An das Steuergerät 9 ist eine Elektromechanik 10, z.B. ein Stellmotor, angeschlossen, durch welche die Position der Lampe 1 bezüglich der optischen Elemente 2 veränderbar ist.

Um die optimale Ausleuchtung der Projektionsfläche 7 zu erreichen, veranlaßt das Steuergerät 9 die Elektromechanik 10 zum Verändern des Abstandes zwischen der Lichtquelle 1 und den optischen Elementen 2a, 2b. Die Elektromechanik 10 kann die Lichtquelle 1 innerhalb des Verstellbereichs B bewegen. Während die Lichtquelle 1 bewegt wird, registriert das Steuergerät 9 die vom Sensor 8 gelieferten Signale S. Diese Signale S ändern sich in Abhängigkeit vom Abstand der Lichtquelle 1 zu den optischen Elementen 2. Das Signale S läßt sich damit als Funktion des Abstands der Lichtquelle 1 zum optischen Element 2 beschreiben. Beim Auftreten eines Maximums für das Signal S stoppt das Steuergerät 9 die Elektromechanik 10, die Position der Lichtquelle 1 ist dadurch festgelegt. Das Erkennen des Maximums erfolgt durch an sich schon bekannte Elektronikschaltungen im Steuergerät 9.

In der Praxis kann es nun vorkommen, daß beim Bewegen der Lichtquelle 1 ein lokales Maximum des Signals S auftritt, das absolute Maximum für das Signal S aber erst dann auftritt, wenn die Lichtquelle 1 noch weiter bewegt wird. Dieses absolute Maximum für das Signal S wird jedoch im vorliegenden Fall nicht erkannt, weil das Steuergerät 9 bereits nach Auftreten des lokalen Maximums eine weitere Bewegung der Lichtquelle 1 unterbricht. Daher ist es vorgesehen, die Lichtquelle 1 über den gesamten Verstellbereich B zu bewegen und die jeweils dazu auftretenden Signale S im Steuergerät 9 zu speichern. Nach Durchfahren des gesamten Verstellbereichs B läßt sich anhand der gespeicherten Werte vom Signal S das absolute Maximum leicht ermitteln. Anschließend wird die Lichtquelle 1 in die Position gebracht, in welcher das Maximum für das Signal S aufgetreten ist.

Diese Vorgehensweise ist besonders dann angebracht, wenn die auf der Projektionsfläche 7 auftretende Lichtintensität nicht nur an einem Punkt, sondern mit mehreren Meßsensoren an mehreren Punkten gemessen und mittels eines Rechners diejenige Position ermittelt werden soll, welche die optimale Ausleuchtung der Projektionsfläche 7 ergibt. In diesem Fall werden die Meßwerte S, SA, SB von den Sensoren 8, 8a, 8b in einem zur Meßvorrichtung gehörenden Steuergerät 9 erfaßt, während die Lichtquelle 1 über den Verstellbereich B bewegt wird.

Anhand der im Steuergerät 9 gespeicherten Signale S, SA, SB läßt sich anschließend unter Berücksichtigung verschiedener Kriterien, z.B. maximale Durchschnittshelligkeit oder minimale Helligkeitsunterschiede, auf der Projektionsfläche 7 der passende Abstand der Lichtquelle 1 vom optischen Element 2 ermitteln.

## Patentansprüche

1. Vorrichtung zur gleichmäßigen Ausleuchtung einer Projektionsfläche mit einer Lichtquelle und mit zwischen der Lichtquelle und der Projektionsfläche angeordneten optischen Elementen, wobei der Abstand zwischen der Lichtquelle und den optischen Elementen veränderbar ist, dadurch gekennzeichnet, daß
   - eine Meßvorrichtung (8, 8a, 8b) die auf der Projektionsfläche (7) auftreffende Lichtintensität registriert und
   - eine Einstellvorrichtung (10) den Abstand, zwischen der Lichtquelle (1, 1') und den optischen Elementen (2a, 2b) in Abhängigkeit von der registrierten Lichtintensität derart verändert, daß Helligkeit und/oder deren Verteilung optimiert werden.

2. Vorrichtung nach Anspruch 1, dadurch gekennzeichnet, daß die Meßvorrichtung (8, 9) nur die, in einem als Referenz dienenden Punkt der Projektionsfläche (7) auftretende Lichtintensität ermittelt.

3. Vorrichtung nach Anspruch 1, dadurch gekennzeichnet, daß die Meßvorrichtung (8, 8a, 8b, 9) an mehreren verschiedenen Punkten der Projektionsfläche (7) die auftreffende Lichtintensität ermittelt.

4. Vorrichtung nach einem der vorhergehenden Ansprüche, dadurch gekennzeichnet, daß die Einstellvorrichtung (10) den Abstand zwischen der Lichtquelle (1, 1') und den optischen Elementen (2a, 2b) solange verändert, bis die Meßvorrichtung (8, 8a, 8b, 9) ein Optimum für die auftreffende Lichtintensität ermittelt hat.

Fig. 1

EP 0 514 728 A1

## EINSCHLÄGIGE DOKUMENTE

EP 92107858.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.⁵) |
|---|---|---|---|
| A | DE - A - 3 602 829 (NIPPON COLUMBIA CO LTD.) * Ansprüche * -- | 1 | G 03 B 21/14 G 03 B 21/20 G 02 B 26/00 |
| D,A | DE - A - 2 412 875 (GEHA-WERKE) * Gesamt * -- | 1 | |
| A | AT - B - 312 324 (GAF CORPORATION) * Gesamt * ---- | 1 | |

RECHERCHIERTE SACHGEBIETE (Int. Cl.⁵)

G 03 B 21/00
G 02 B 26/00
G 02 F 1/00
G 05 D 25/00

Der vorliegende Recherchenbericht wurde für alle Patentansprüche erstellt.

| Recherchenort | Abschlußdatum der Recherche | Prüfer |
|---|---|---|
| WIEN | 20-08-1992 | HANSI |